# EUROPÄISCHE PATENTSCHRIFT

(11) **EP 1 371 138 B1**
(45) Veröffentlichungstag und Bekanntmachung des Hinweises auf die Patenterteilung: **29.03.2006**
(21) Anmeldenummer: 02719703.7
(22) Anmeldetag: 18.01.2002
(51) Int. Cl.: H03K 19/0175, H04L 25/02

(54) **VORRICHTUNG ZUM BEREITSTELLEN EINES EINGANGSSIGNALS FÜR EINE AUSGANGSSEITIG FEHLANGEPASSTE LEITUNG**
DEVICE FOR PREPARING AN INPUT SIGNAL FOR A LINE WHICH IS MISMATCHED ON THE OUTPUT SIDE
DISPOSITIF DE MISE EN FORME D'UN SIGNAL D'ENTREE POUR LIGNE MAL ADAPTEE EN SORTIE

(30) Priorität: 31.01.2001 DE 20101605 U
(43) Veröffentlichungstag der Anmeldung: 17.12.2003
(73) Patentinhaber: IC-HAUS GmbH, D-55294 Bodenheim (DE)
(72) Erfinder: HERZ, Manfred, 55130 Mainz (DE)
(74) Vertreter: Kampfenkel, Klaus
(86) Internationale Anmeldenummer: PCT/EP2002/000454
(87) Internationale Veröffentlichungsnummer: WO 2002/075925

(56) Entgegenhaltungen:
- WO-A-00/57570
- US-A- 5 760 601
- SEKIGUCHI T ET AL: "LOW-NOISE, HIGH-SPEED DATA TRANSMISSION USING A RINGING-CANCELLING OUTPUT BUFFER" IEEE JOURNAL OF SOLID-STATE CIRCUITS, IEEE INC. NEW YORK, US, Bd. 30, Nr. 12, Dezember 1995 (1995-12), Seiten 1569-1574, XP002147063 ISSN: 0018-9200

## Beschreibung

Die Erfindung betrifft eine Vorrichtung zum Bereitstellen eines Eingangssignals für eine ausgangsseitig fehlangepasste Leitung sowie einen Leitungstreiber zum Einsatz in einer solchen Vorrichtung.

Zur Datenübertragung über eine Mehrdrahtleitung, insbesondere eine Zweidrahtleitung werden üblicherweise Leitungstreiber verwendet, die einen ausreichend hohen Ausgangsstrom liefern können. Solche Leitungstreiber sind allgemein bekannt.

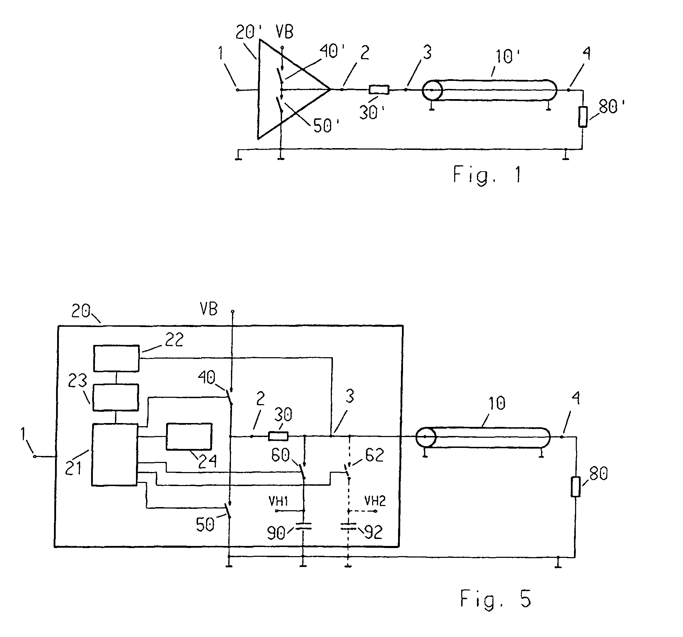

Üblicherweise ist ein Leitungstreiber über seinen Ausgangswiderstand mit dem Eingang einer Leitung verbunden, deren Wellenwiderstand viel kleiner als der Abschlusswiderstand der Leitung ist. Der Ausgangswiderstand entspricht hingegen etwa dem Wellenwiderstand der Leitung. Eine solche Anordnung, deren Funktionsweise weiter unten noch näher erläutert wird, ist in Fig. 1 gezeigt. Ein Nachteil herkömmlicher Leitungstreiber ist darin zu sehen, dass in dem Ausgangswiderstand des Leitungstreibers eine relativ hohe Verlustleistung erzeugt wird. Die Verlustleistung hängt unter anderem von der an den Eingang des Ausgangswiderstandes angelegten Spannung und der am Eingang der Leitung auftretenden Spannung, die durch am Leitungsausgang reflektierte Signalanteile beeinflusst wird, ab.

Aus der WO 00/57570 A ist ein Leitungstreiber bekannt, der unmittelbar, das heißt ohne Zwischenschaltung eines Widerstandes an eine Übertragungsleitung, welche mit einer Last abgeschlossen ist, angeschlossen ist. Über die drei Schalter können Spannungen mit unterschiedlichem Peqel an den Eingang der Übertragungsleitung angelegt werden um Überschwingungen in der Übertragungsleitung zu reduzieren, ohne die Verlustleistung zu erhöhen.

Der Erfindung liegt nunmehr die Aufgabe zugrunde, eine Vorrichtung zum Bereitstellen eines.Eingangssignals für eine ausgangsseitig fehlangepasste Leitung sowie einen dafür geeigneten Leitungstreiber bereitzustellen, mit dem die Verlustleistung in dem Ausgangswiderstand des Leitungstreibers gegenüber einer herkömmlichen Leitungstreiberanordnung deutlich reduziert werden kann.

Der Kerngedanke der Erfindung ist darin zu sehen, einen Leitungstreiber zu entwickeln, der am Eingang des Ausgangswiderstandes des Leitungstreibers einen Spannungsverlauf erzeugt, der dem Spannungsverlauf am Eingang einer vorzugsweise eingangsseitig angepassten Leitung, der durch am Leitungsende reflektierte Signalanteile beeinflusst wird, angenähert ist. Auf diese Weise kann die Zeitdauer, während der ein Strom durch den Ausgangswiderstand fließt, und damit die Verlustleistung im Ausgangswiderstand des Leitungstreibers deutlich reduziert werden.

Das oben genannte technische Problem löst die Erfindung zum einen mit den Merkmalen des Anspruchs 1 und zum anderen mit den Merkmalen des Anspruchs 9.

Hierzu weist die Vorrichtung zum Bereitstellen eines Eingangssignals für eine ausgangsseitig fehlangepasste Leitung einen Leitungstreiber auf, der über einen Widerstand, nachfolgend auch als Ausgangswiderstand bezeichnet, mit dem Eingang der Leitung verbunden ist. Ferner ist in dem Leitungstreiber eine Steuereinrichtung implementiert, die in Abhängigkeit von einem Dateneingangssignal zu vorbestimmbaren Zeitpunkten einen ersten Schalter zum Anlegen einer Versorgungsspannung an den Eingang des Widerstands, einen zweiten Schalter zum Anlegen eines Bezugspotentials an den Eingang des Widerstands und einen dritten Schalter zum Anlegen einer ersten Hilfsspannung an den Eingang der Leitung steuern kann, um die Verlustleistung im Widerstand zu minimieren.

An dieser Stelle sei erwähnt, dass unter "ausgangsseitig fehlangepasster Leitung" vorzugsweise eine Leitung verstanden wird, die mit einem Abschlusswiderstand abgeschlossen ist, der größer als der Wellenwiderstand der Leitung ist. Beispielsweise wird ein 1kOhm-Widerstand angeschlossen. Es können jedoch auch kleinere Widerstände verwendet werden.

Um die Verlustleistung im Widerstand maximal reduzieren zu können, ist es erforderlich, den Zeitpunkt zu ermitteln, zu dem das am Ausgang der Leitung reflektierte Dateneingangssignal am Eingang der Leitung erscheint. Mit Kenntnis dieses Zeitpunktes ist es dann möglich, den dritten Schalter unmittelbar vor dem Ankommen des reflektierten Signals am Eingang der Leitung zu öffnen. Denn die Zeit zwischen dem Öffnen des dritten Schalters und dem Ankommen des reflektierten Signals am Anfang der Leitung bestimmt die Zeit, während der ein Strom durch den Widerstand fließt und somit eine Verlustleistung im Widerstand hervorruft. Hierzu weist der Leitungstreiber einen mit dem Eingang der Leitung verbundenen Strom- oder Spannungsdetektor sowie eine Auswerteeinrichtung auf, die in Abhängigkeit von dem Dateneingangssignal und von dem vom Strom- oder Spannungsdetektor gelieferten Ausgangssignal die Zeitpunkte zum Öffnen und Schließen des ersten, zweiten und dritten Schalters bestimmt.

Solange der Leitungstreiber in einer kühlen Umgebung betrieben wird, beeinträchtig die Wärmeentwicklung im Widerstand nicht die Funktionsfähigkeit des Leistungstreiber. Der Leitungstreiber kann daher bei einer entsprechend niedrigen Bauelementtemperatur wie ein herkömmlicher Leitungstreiber, d. h. ohne Ansteuerung des dritten Schalters, betrieben werden. Allerdings kann bei Überschreiten einer bestimmten kritischen Bauelementtemperatur der Leitungstreiber beschädigt oder sogar zerstört werden. Dies kann dadurch vermieden werden, dass bei Überschreiten einer kritischen Temperatur die Verlustleistung im Widerstand minimiert wird. Hierzu wird, wie bereits erwähnt, der dritte Schalter zum Anschalten der ersten Hilfsspannung verwendet. Mit Hilfe eines Temperatursensors ist es nunmehr möglich, das Überschreiten einer kritischen Bauelementtemperatur zu ermitteln. Unter Ansprechen auf das Überschreiten der kritischen Temperatur steuert dann die Steuereinrichtung den dritten Schalter sowie den ersten und zweiten Schalter entsprechend an.

Zweckmäßigerweise ist der Widerstand am Eingang der Leitung betragsmäßig so groß wie der Wellenwiderstand der Leitung.

Da bei einer ausgangsseitig fehlangepassten Leitung die Spannung ausgangsseitig zeitweise etwa doppelt so groß ist wie die Eingangsspannung, ist die erste Hilfsspannung im Wesentlichen gleich der Hälfte der Versorgungsspannung, um zu vermeiden, dass die Ausgangsspannung der Leitung die Versorgungsspannung überschreitet und angeschlossene Verbraucher entschädigt.

Die Verlustleistung im Widerstand kann weiter reduziert werden, indem beispielsweise eine zweite Hilfsspannung über einen vierten Schalter unter Steuerung der Steuereinrichtung zu vorbestimmten Zeitpunkten an den Eingang der Leitung angelegt wird. Zweckmäßigerweise ist hierbei die erste Hilfsspannung größer als die Hälfte der Versorgungsspannung, wohingegen die zweite Hilfsspannung einen Wert unterhalb der Hälfte der Versorgungsspannung annimmt, um den Spannungsverlauf am Leitungsende zu optimieren. Auf diese Weise lässt sich am Eingang der Leitung ein verzerrt treppenförmiger Spannungsverlauf erzeugen, der mit dem Spannungsverlauf am Eingang des Widerstandes den Strom durch den Widerstand weiter reduziert. Dadurch werden Spannungsabfälle längs der Leitung kompensiert.

Der dritte Schalter kann über einen Kondensator mit dem Bezugspotential verbunden sein. Der Kondensator dient dazu, einen vorbestimmten Strom in die Leitung einzuspeisen und von dieser wieder aufzunehmen.

Zweckmäßigerweise sind die Steuereinrichtung, der erste, zweite und dritte und gegebenenfalls weitere Schalter, der Strom- oder Spannungsdetektor, der Temperatursensor, die Auswerteeinrichtung sowie der Widerstand als integrierte Schaltung aufgebaut. Das technische Problem wird ebenso mit den Merkmalen des Anspruchs 7, der einen Leitungstreiber betrifft, gelöst.

Die Erfindung wird nachstehend anhand eines Ausführungsbeispiels in Verbindung mit den beiliegenden Zeichnungen näher erläutert. Es zeigen:
- Fig. 1: einen herkömmlichen Leitungstreiber, der mit einer ausgangsseitig fehlangepassten Leitung verbunden ist;
- Fig. 2a - 2d: die Spannungsverläufe an vier verschiedenen Bezugspunkten zwischen dem Eingang des Leitungstreibers und dem Ausgang der Leitung;
- Fig. 3: den Stromverlauf durch den Ausgangswiderstandwiderstand des Leitungstreibers;
- Fig. 4: die im Ausgangswiderstand anfallende Verlustleistung;
- Fig. 5: den erfindungsgemäßen Leitungstreiber, der mit einer ausgangsseitig fehlangepassten Leitung verbunden ist;
- Fig. 6a - 6d: die Spannungsverläufe an vier Bezugspunkten zwischen dem Eingang des Leitungstreibers und dem Ausgang der Leitung;
- Fig. 7a - 7c: die Steuersignale zum Schließen und Öffnen des ersten, zweiten und dritten Schalters;
- Fig. 8: den Stromverlauf über den geschlossenen dritten Schalter, und
- Fig. 9: die im Ausgangswiderstand anfallende Verlustleistung.

Fig. 1 zeigt einen eingangs bereits erwähnten herkömmlichen Leitungstreiber 20', der über einen Ausgangswiderstand 30' am Eingang 3 mit einer Leitung 10' verbunden ist. Die Leitung 10' ist mit einem Abschlusswiderstand 80' abgeschlossen, der betragsmäßig viel größer ist als der Wellenwiderstand der Leitung 10'. Der Leitungstreiber 20' weist einen ersten Schalter 40' zum Anlagen einer Versorgungsspannung VB an den Eingang 2 des Ausgangswiderstandes 30' auf. Ferner ist ein zweiter Schalter 50' im Leitungstreiber 20' vorgesehen, über den der Eingang 2 des Ausgangswiderstandes 30' mit Masse verbunden ist. Zweckmäßigerweise ist der Widerstandswert des Ausgangswiderstandes 30' gleich dem Wellenwiderstand der Leitung 10'.

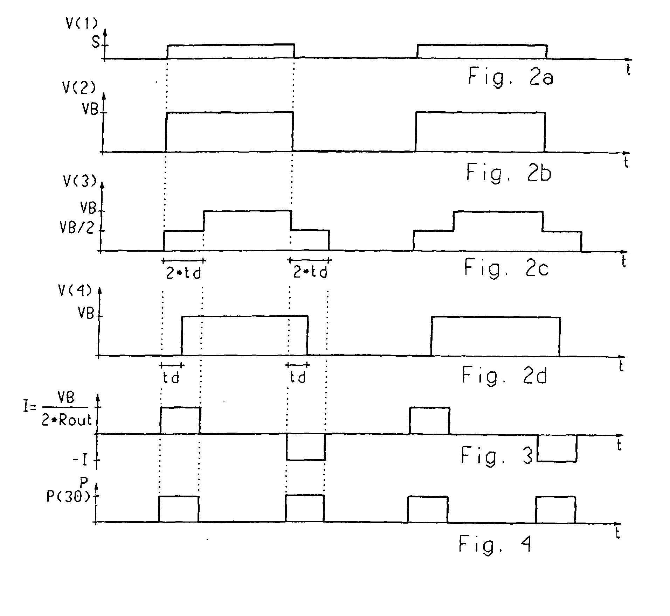

Die Funktionsweise des bekannten Leitungstreibers kann am besten in Verbindung mit den in den Figuren 2a - 2d und den Figuren 3 und 4 dargestellten Kurvenläufen erläutert werden.

Fig. 2a zeigt das Datensignal, welches an den Eingang 1 des Leitungstreibers 20' zur Übertragung über die Leitung 10' angelegt wird. Das Datensignal umfasst beispielsweise eine Folge aus Nullen und Einsen, die dem Low- bzw. High-Pegel des Datensignals entsprechen können. Während des Anliegens einer Eins am Eingang 1 des Leitungstreibers 20' wird die Versorgungsspannung VB über den Schalter 40' an den Eingang des Widerstandes 30' angelegt, wie dies in Fig. 2b dargestellt ist. Da der Ausgangswiderstand 30' und die Leitung 10' wie ein Spannungsteiler wirken, liegt am Bezugspunkt 3 für die Zeit 2td, dies entspricht der doppelten Laufzeit der Leitung 10', die halbe Versorgungsspannung an. Infolge der ausgangsseitigen Fehlanpassung wird das über die Leitung 10' übertragene Datensignal teilweise reflektiert. Nach der Zeit 2td steigt daher die Spannung am Eingang 3 der Leitung 10'sprunghaft auf die Versorgungsspannung an. Am Ende des Datensignals wird der Schalter 40' wieder geöffnet und Schalter 50' geschlossen. Zu diesem Zeitpunkt fällt die Spannung auf das Bezugspotential ab, wohingegen die Spannung am Eingang 3 der Leitung 10' für die Zeit 2td auf die Halbe Versorgungsspannung und danach auf das Bezugspotential abfällt. Ein Vergleich der Spannungsverläufe gemäß Fig. 2b und 2c zeigt, dass nach dem Anlegen der Versorgungsspannung an den Bezugspunkt 2 und nach dem Trennen der Versorgungsspannung jeweils für eine Zeit 2td eine Spannung über dem Ausgangswiderstand 30' abfällt, die den in Fig. 3 dargestellten Stromfluss im Ausgangswiderstand 30' hervorruft. Die entsprechende Verlustleistung im Ausgangswiderstand 30' ist in Fig. 4 gezeigt. Das gegenüber dem Dateneingangssignal um die Laufzeit td der Leitung 10' verzögerte Ausgangssignal am Bezugspunkt 4 ist in Fig. 2d dargestellt.

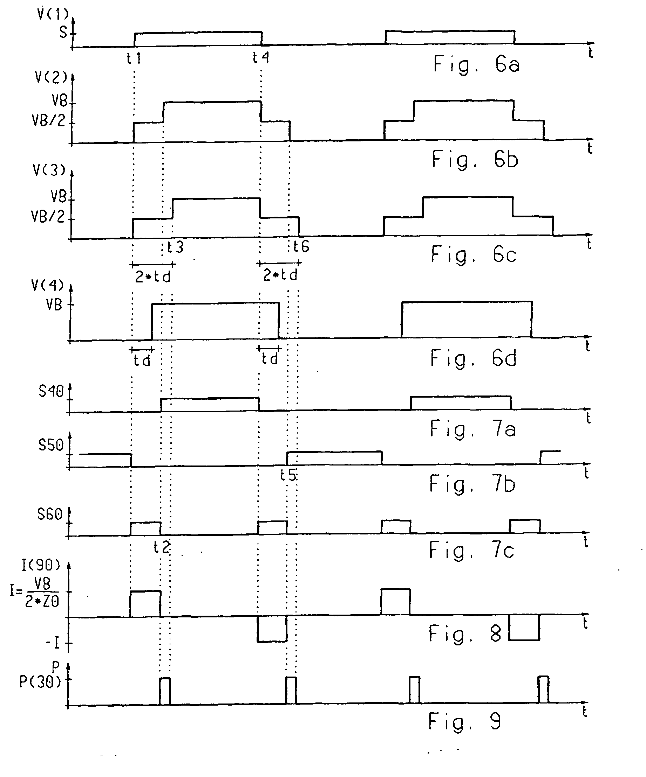

Mit der in Fig. 5 gezeigten Anordnung ist es nunmehr möglich, den Stromfluss durch den Ausgangswiderstand 30 und somit die Verlustleistung gegenüber dem herkömmlichen, in Fig. 1 gezeigten Leistungstreiber zu reduzieren.

Der in Fig. 5 gezeigte Leitungstreiber 20 ist zunächst über einen Ausgangswiderstand 30 mit dem Eingang 3 einer Leitung 10 verbunden. Die Leitung 10 ist am Ausgang 4 mit einem Abschlusswiderstand 80 abgeschlossen, dessen Betrag viel größer als der Wellenwiderstand der Leitung 10 ist. Mit anderen Worten liegt ausgangsseitig eine erheblich fehlangepasste Leitung 10 vor. Der Leitungstreiber 20 weist einen Strom- oder Spannungsdetektor 22 auf, der mit dem Eingang 3 der Leitung 10 verbunden ist. Der Strom- oder Spannungsdetektor 22 ist mit einer Auswerteeinrichtung 23 verbunden, deren Funktion nachfolgend noch ausführlich erläutert wird. Ferner ist eine Steuereinrichtung 21 des Leitungstreibers 20 mit einem ersten Schalter 40 zum Anlegen der Versorgungsspannung an den Eingang 2 des Widerstandes 30, mit einem zweiten Schalter 50 zum Anlegen eines Bezugspotentials, insbesondere Masse, an den Eingang 2 des Widerstandes 30 sowie mit einem dritten Schalter 60 zum Anlegen einer ersten Hilfsspannung VH1 an den Eingang 3 der Leitung 10 verbunden. Alternativ kann die Steuereinrichtung 23 mit weiteren Schaltern zum Anlegen verschiedener Hilfsspannungen verbunden sein. In Fig. 5 ist lediglich ein weiterer Schalter 62 zum Anlegen einer zweiten Hilfsspannung VH2 in gestrichelter Form gezeigt. Die Schalter 60 und 62 sind über einen Kondensator 90 bzw. 92 mit Masse verbunden.

Bei der weiteren Erläuterung des erfindungsgemäßen Leitungstreibers 20 wird lediglich der Schalter 60 und die erste Hilfsspannung berücksichtigt. Ferner weist der Leitungstreiber 20 einen Temperatursensor 24 auf, über den die Temperatur des Leitungstreibers 20 gemessen werden kann. Der Temperatursensor 24 ist vorzugsweise direkt mit der Steuereinrichtung 21 verbunden, um, wie nachfolgend noch näher erläutert wird, die Schaltzeitpunkte der Schalter 40, 50 und 60 zu bestimmen.

Nachfolgend wird die Funktionsweise des Leitungstreibers 20 in Verbindung mit den Figuren 6a - 6d, 7a - 7c sowie den Figuren 8 und 9 näher erläutert.

Wie bereits erwähnt, ist der Leitungstreiber 20 nach Fig. 5 in der Lage, mit Hilfe des Schalters 60 und der damit verbundenen Hilfsspannung die Verlustleistung im Ausgangswiderstand 30 gegenüber der Verlustleistung im Widerstand 30' des herkömmlichen Leitungstreibers nach Fig. 1 deutlich zu reduzieren. Wir betrachten zunächst die Figuren 7a - 7c, die die von der Steuereinrichtung 21 bereitgestellten Steuersignale zum Schließen und Öffnen der Schalter 40, 50 bzw. 60 darstellen. Mit der ansteigenden Flanke des in Fig. 6a gezeigten Datensignals, d h. zum Zeitpunkt t1 wird der Schalter 60 geschlossen und somit die Hilfsspannung VH1 an den Eingang 3 der Leitung 10 angelegt. Die Hilfsspannung VH1 beträgt vorzugsweise die Hälfte der Versorgungsspannung VB des Leitungstreibers 20. Die Schalter 40 und 50 sind zu diesem Zeitpunkt offen. Bis zum Zeitpunkt t2, der in Fig. 7c dargestellt ist, sind die Schalter 40 und 50 weiterhin geöffnet, während der Schalter 60 während dieser Zeit geschlossen bleibt. Wie in Fig. 6c gezeigt, ist die Zeitspanne zwischen t1 und t2 kürzer als die doppelte Laufzeit 2td der Leitung 10. Solange der Schalter 60 geschlossen ist, liegt sowohl am Eingang 2 des Ausgangswiderstandes 30 als auch am Eingang 3 der Leitung 10 die Hilfsspannung VH1, im vorliegenden Beispiel also die halbe Versorgungsspannung, an. Dieser Sachverhalt ist in den Figuren 6b und 6c dargestellt. Demzufolge fließt durch den Ausgangswiderstand 30 während dieser Zeit kein Strom, so dass auch keine Verlustleistung im Ausgangswiderstand 30 entsteht. Dies ist in Fig. 9 verdeutlicht. Zum Zeitpunkt t2 wird nunmehr der Schalter 60 geöffnet und der Schalter 40 geschlossen, wodurch die Spannung am Eingang 2 des Ausgangswiderstandes 30 sprunghaft auf die Höhe der Versorgungsspannung VB ansteigt. In diesem Moment liegt am Ausgangswiderstand 10, und zwar an den Punkten 2 und 3, eine Potentialdifferenz von etwa VB/2 an, die einen Stromfluss durch den Ausgangswiderstand 30 verursacht. Die dazugehörende Verlustleistung im Ausgangswiderstand 30 ist in Fig. 9 dargestellt. Sobald jedoch das am Ausgang 4 der Leitung reflektierte Datensignal nach der Zeit 2td (Zeitpunkt t3), gemessen vom Zeitpunkt t1, am Eingang 3 der Leitung 10 ankommt, steigt die Spannung am Leitungseingang 3 sprunghaft auf die Versorgungsspannung an. Die Potentialdifferenz an den Bezugspunkten 2 und 3 und somit die Verlustleistung im Ausgangswiderstand 30 geht dann wieder gegen Null. Am Ende des Datensignals zum Zeitpunkt t4 wird der Schalter 40 geöffnet, der Schalter 50 ist nach wie vor geöffnet und der Schalter 60 wird wieder geschlossen. Zum Zeitpunkt t6 wird der Schalter 50 geschlossen und der Schalter 60 geöffnet. An dieser Stelle sei betont, dass die Zeitdauer t5-t4 kleiner ist als die doppelte Laufzeit 2td der Leitung 10. Die Schaltvorgänge sind in den Fig. 7a bis 7c im Einzelnen gezeigt. Wie den Fig. 6b und 6c entnommen werden kann, bewirkt das Öffnen des Schalters 40 und das Schließen des Schalters 60 zum Zeitpunkt t4, dass die Spannungen an den Bezugspunkten 2 und 3 gleichzeitig von VB auf VB/2 abfallen. Dieser Spannungsverlauf bleibt bis zum Zeitpunkt t5 erhalten. Nach dem Schließen des Schalters 50 und dem Öffnen des Schalters 60 zum Zeitpunkt t4 fällt jedoch die Spannung am Bezugspunkt 2 sprunghaft auf das Bezugspotential ab, während die Spannung am Bezugspunkt auf Grund des am Leitungsende 4 reflektierten Datensignals erst nach der Zeit t4 + 2td (entspricht dem Zeitpunkt t6) auf das Bezugspotential abfällt. Der Grund hierfür ist darin zu sehen, dass das am Leitungsende reflektierte Datensignal bis zum Zeitpunkt t6 am Leitungseingang 3 erscheint. Demzufolge bestimmt die Zeitdauer t3-t2 und t6 - t5, das ist die Zeit zwischen dem Öffnen des Schalters 60 und dem Ankommen des reflektierten Signals am Eingang 3 der Leitung 10, bzw. die Zeit zwischen dem Öffnen des Schalters 60 und dem Abklingen des reflektierten Datensignals am Eingang der Leitung 10, die Zeit, während der Verlustleistung im Ausgangswiderstand 30 erzeugt wird. Die im Ausgangswiderstand 30 erzeugte Verlustleistung ist in Fig. 9 dargestellt.

Um die Verlustleistung im Ausgangswiderstand 30 zu minimieren, sollte daher der Schalter 60 erst kurz vor dem Erscheinen des reflektierten Signals am Eingang 3 zum Zeitpunkt t3 bzw. erst kurz vor dem Abklingen des reflektierten Signals am Eingang der Leitung 10 zum Zeitpunkt t6 geöffnet werden. Um die in Fig. 6c eingetragenen Zeitpunkte t3 und t6 bestimmen zu können, ist der Strom- oder Spannungsdetektor 22 mit dem Leitungseingang 3 verbunden.

Zweckmäßigerweise wird zu Beginn der Datenübertragung das erste zu übertragende Datenbit dazu verwendet, diese Zeitpunkte zu bestimmen. In Abhängigkeit von dem Datensignal nach Fig. 6a und dem am Bezugspunkt 3 vom Strom- oder Spannungsdetektor 22 erfassten Signalverlauf ermittelt die Auswerteeinrichtung 23 den Schaltzeitpunkt t1 zum Schließen des Schalters 60, den Zeitpunkt t2 zum Öffnen des Schalters 60 und zum Schließen des Schalters 40, den Zeitpunkt t4 zum Öffnen des Schalters 40 sowie zum erneuten Schließen des Schalters 60 und den Zeitpunkt t5 zum Öffnen des Schalters 60 und zum Schließen des Schalters 40.

Fig. 8 zeigt den Strom, der bei geschlossenem Schalter 60 vom Kondensator 90 in die Leitung 10 und umgekehrt von der Leitung 10 zurück in den Kondensator 90 fließt.

Fig. 6d zeigt ähnlich der Fig. 2d den Spannungsverlauf am Ausgang 4 der Leitung 10, der um die Laufzeit t_{d} der Leitung 10 gegenüber dem Eingangssignal verzögert ist.

Gewöhnlich führt die im Ausgangswiderstand 30 erzeugte Verlustwärme nicht zu einer Beschädigung oder Zerstörung des Leitungstreibers 20, sofern die Bauelementtemperatur entsprechend niedrig ist. Deshalb kann bei unkritischen Temperaturen der Leitungstreiber 10 nach Fig. 5 zunächst ohne Ansteuerung des Schalters 60 betrieben werden. Sobald jedoch der Temperatursensor 24 das Überschreiten einer vorgegebenen kritischen Temperatur erfasst, wird die Steuereinrichtung 21 veranlasst, beim nächsten Schaltzyklus den Schalter 60 mit anzusteuern, um auf diese Weise die Verlustleistung im Ausgangswiderstand 30 und somit die Temperatur des Leitungstreibers 20 wieder zu reduzieren. Mit anderen Worten kann der Leitungstreiber 20 nach Fig. 5 bei unkritischen Bauelementtemperaturen wie ein gewöhnlicher in Fig. 1 gezeigter Leitungstreiber 20' betrieben werden. Erst bei Überschreiten einer kritischen Temperatur wird der Schalter 60 mit angesteuert.

Ein Vergleich der Figuren 4 und 9 zeigt, dass beim herkömmlichen Leitungstreiber 20'Verlustwärme im Ausgangswiderstand 30' während einer Zeitdauer von 2td erzeugt wird, während beim Leitungstreiber nach Fig. 5 bei Verwendung des Schalters 60 eine Verlustleistung im Ausgangswiderstand 30 lediglich zwischen der Zeit t3-t2 und t6-t5 erzeugt wird.

## Patentansprüche

1. Vorrichtung zum Erzeugen eines Eingangssignals für eine ausgangsseitig fehlangepasste Leitung (10), umfassend einen Leitungstreiber (20), der eine Steuereinrichtung (21)aufweist, die in Abhängigkeit von einem Dateneingangssignal einen ersten Schalter (40), zum Anlegen einer Versorgungsspannung an den Eingang eines Widerstandes (30), einen zweiten Schalter (50) zum Anlegen eines Bezugspotentials an den Eingang des Widerstandes (30) und einen dritten Schalter (60) zum Anlegen einer ersten Hilfsspannung an den Eingang der Leitung (10) zu vorbestimmbaren Zeitpunkten ansteuern kann, wobei der Ausgang des Widerstandes (30) mit dem Eingang der Leitung (10) verbunden ist und dass die Steuereinrichtung (21) den ersten, zweiten und dritten Schalter derart ansteuert, dass die Verlustleistung im Widerstand (30) minimiert wird.

2. Vorrichtung nach Anspruch 1,
**dadurch gekennzeichnet, dass**
der Leitungstreiber (20) einen mit dem Eingang der Leitung (10) verbundenen Strom- oder Spannungsdetektor (22) sowie eine Auswerteeinrichtung (23) aufweist, die in Abhängigkeit von dem Dateneingangssignal und von dem vom Strom- oder Spannungsdetektor gelieferten Ausgangssignal die Zeitpunkte zum Öffnen und Schließen des ersten, zweiten und dritten Schalters bestimmt.

3. Vorrichtung nach Anspruch 1 oder 2,
**dadurch gekennzeichnet, dass**
der Leitungstreiber (20) einen Temperatursensor (24) aufweist, und dass
die Steuereinrichtung (21) den dritten Schalter erst dann ansteuert, wenn der Temperatursensor (24) das Überschreiten einer vorbestimmten Temperatur erfasst.

4. Vorrichtung nach einem der Ansprüche 1 bis 3,
**dadurch gekennzeichnet, dass**
der Widerstand (30) dem Wellenwiderstand der Leitung (10) entspricht, und dass die Leitung (10) mit einem Widerstand abgeschlossen ist, der größer als der Wellenwiderstand der Leitung (10) ist.

5. Vorrichtung nach einem der Ansprüche 1 bis 4,
**dadurch gekennzeichnet, dass**
die erste Hilfsspannung im Wesentlichen gleich der Hälfte der Versorgungsspannung ist.

6. Vorrichtung nach einem der Ansprüche 1 bis 4,
**dadurch gekennzeichnet, dass**
die Steuereinrichtung (21) einen vierten Schalter zum Anlegen einer zweiten Hilfsspannung an den Eingang der Leitung (10) zu vorbestimmbaren Zeitpunkten ansteuern kann, wobei die erste Hilfsspannung einen Wert zwischen der Versorgungsspannung und der Hälfte der Versorgungsspannung und die zweite Hilfsspannung einen Wert zwischen Bezugspotential und der Hälfte der Versorgungsspannung annimmt.

7. Vorrichtung nach einem der Ansprüche 1 bis 6,
**dadurch gekennzeichnet, dass**
der Leistungstreiber (20) und der Widerstand (30) als integrierte Schaltung ausgebildet sind.

8. Vorrichtung nach einem der Ansprüche 1 bis 7,
**dadurch gekennzeichnet, dass**
der dritte Schalter (60) über einen Kondensator (90) mit Bezugspotential verbunden ist

9. Leitungstreiber zum Anschalten an eine ausgangsseitig fehlangepasste Leitung (10), umfassend
eine Steuereinrichtung (21), die in Abhängigkeit von einem Dateneingangssignal einen ersten Schalter (40) zum Anlegen einer Versorgungsspannung an den Eingang
eines Widerstandes (30), einen zweiten Schalter (50) zum Anlegen eines Bezugspotentials an den Eingang des Widerstandes (30) und einen dritten Schalter (60) zum Anlegen einer ersten Hilfspannung an den Ausgang des Widerstandes (30) zu vorbestimmbaren Zeitpunkten ansteuern kann, wobei der Ausgang des Widerstandes (30)
mit dem Eingang einer Leitung (10) verbindbar ist, wobei die Steuereinrichtung den ersten, zweiten und dritten Schalter derart ansteuert, dass die Verlustleistung im Widerstand (30) minimiert wird.

## Revendications

1. Dispositif de production d'un signal d'entrée pour une ligne mal adaptée en sortie (10), comprenant un transmetteur de ligne (20) qui comporte un dispositif de commande (21) qui peut commander en fonction d'un signal d'entrée de données un premier interrupteur (40) pour l'application d'une tension d'alimentation à l'entrée d'une résistance (30), un deuxième interrupteur (50) pour l'application d'un potentiel de référence à l'entrée de la résistance (30) et un troisième interrupteur (60) pour l'application d'une première tension auxiliaire à l'entrée de la ligne (10) à des instants pouvant être prédéterminés,
la sortie de la résistance (30) étant reliée à l'entrée de la ligne (10) et le dispositif de commande (21) commandant les premier, deuxième et troisième interrupteurs de manière à minimiser la puissance dissipée dans la résistance (30).

2. Dispositif selon la revendication 1,
**caractérisé en ce que**
le transmetteur de ligne (20) comporte un détecteur de courant ou de tension (22) relié à l'entrée de la ligne (10) ainsi qu'un dispositif d'évaluation (23) qui détermine en fonction du signal d'entrée de données et du signal de sortie fourni par le détecteur de courant ou de tension les instants pour l'ouverture et la fermeture du premier, du deuxième et du troisième interrupteur.

3. Dispositif selon la revendication 1 ou 2,
**caractérisé en ce que**
le transmetteur de ligne (20) comporte un capteur de température (24), et
le dispositif de commande (21) commande le troisième interrupteur seulement lorsque le capteur de température (24) détecte le dépassement d'une température prédéterminée.

4. Dispositif selon l'une des revendications 1 à 3,
**caractérisé en ce que**
la résistance (30) correspond à l'impédance caractéristique de la ligne (10) et **en ce que** la ligne (10) est terminée par une résistance qui est plus grande que l'impédance caractéristique de la ligne (10).

5. Dispositif selon l'une des revendications 1 à 4,
**caractérisé en ce que**
la première tension auxiliaire est sensiblement égale à la moitié de la tension d'alimentation.

6. Dispositif selon l'une des revendications 1 à 4,
**caractérisé en ce que**
le dispositif de commande (21) peut commander un quatrième interrupteur pour appliquer une deuxième tension auxiliaire à l'entrée de la ligne (10) à des instants pouvant être prédéterminés, la première tension auxiliaire prenant une valeur entre la tension d'alimentation et la moitié de la tension d'alimentation et la deuxième tension auxiliaire prenant une valeur entre le potentiel de référence et la moitié de la tension d'alimentation.

7. Dispositif selon l'une des revendications 1 à 6,
**caractérisé en ce que**
le transmetteur de ligne (20) et la résistance (30) sont conçus sous forme de circuit intégré.

8. Dispositif selon l'une des revendications 1 à 7,
**caractérisé en ce que**
le troisième interrupteur (60) est relié au potentiel de référence par l'intermédiaire d'un condensateur (90).

9. Transmetteur de ligne pour le raccordement à une ligne mal adaptée en sortie (10), comprenant un dispositif de commande (21) qui peut commander en fonction d'un signal d'entrée de données un premier interrupteur (40) pour l'application d'une tension d'alimentation à l'entrée d'une résistance (30), un deuxième interrupteur (50) pour l'application d'un potentiel de référence à l'entrée de la résistance (30) et un troisième interrupteur (60) pour l'application d'une première tension auxiliaire à la sortie de la résistance (30) à des instants pouvant être prédéterminés,
la sortie de la résistance (30) pouvant être reliée à l'entrée de la ligne (10) et le dispositif de commande commandant les premier, deuxième et troisième interrupteurs de manière à minimiser la puissance dissipée dans la résistance (30).

## Claims

1. Device for generating an input signal for a line (10) which is mismatched on the output side (10), comprising a line driver (20) which comprises a control device (21) which, in dependence upon a data input signal, is adapted to control a first switch (40) for feeding a supply voltage to the input of a resistor (30), a second switch (50) for feeding a reference potential to the input of the resistor (30) and a third switch (60) for feeding a first auxiliary voltage to the input of the line (10) at predefinable times,
wherein the output of the resistor (30) is connected to the input of the line (10) and the control device (21) controls the first, second and third switches in such a way that power dissipation is minimised in the resistor.

2. Device according to claim 1,
**characterised in that**
the line driver (20) comprises a current or voltage detector (22) connected to the input of the line (10) and an evaluating device (23) which determines the times for opening and closing the first, second and third switches in dependence upon the data input signal and upon the output signal supplied by the current or voltage detector.

3. Device according to claim 1 or 2,
**characterised in that**
the line driver (20) comprises a temperature sensor (24) and **in that** the control device (21) only controls the third switch when the temperature sensor (24) detects the exceeding of a predefined temperature.

4. Device according to one of the claims 1 to 3,
**characterised in that**
the resistor (30) matches the characteristic impedance of the line (10) and **in that** the line (10) is terminated with a resistance which is greater than the characteristic impedance of the line (10).

5. Device according to one of the claims 1 to 4,
**characterised in that**
the first auxiliary voltage is substantially equal to half of the supply voltage.

6. Device according to one of the claims 1 to 4,
**characterised in that**
the control device (21) is adapted to control a fourth switch for feeding a second auxiliary voltage to the input of the line (10) at predefinable points in time
wherein the first auxiliary voltage assumes a value between the supply voltage and half of the supply voltage and the second auxiliary voltage assumes a value between the reference potential and half of the supply voltage.

7. Device according to one of the claims 1 to 6,
**characterised in that**
the line driver (20) and the resistor (30) are formed as an integrated circuit.

8. Device according to one of the claims 1 to 7,
**characterised in that**
the third switch (60) is connected to reference potential by means of a condenser (90).

9. Line driver for connecting to a line (10) which is mismatched on the output side, comprising a control device (21) which, in dependence upon a data input signal, is adapted to control a first switch (40) for feeding a supply voltage to the input of a resistor (30), a second switch (50) for feeding a reference potential to the input of the resistor (30) and a third switch (60) for feeding a first auxiliary voltage to the output of the resistor (30) at predefinable times wherein the output of the resistor (30) can be connected to the input of a line (10) wherein the control device controls the first, second and third switches in such a way that power dissipation is minimised in the resistor (30).
